Europäisches Patentamt

European Patent Office

Office européen des brevets

(11) Veröffentlichungsnummer: **0 275 331**
**B1**

(12) **EUROPÄISCHE PATENTSCHRIFT**

(45) Veröffentlichungstag der Patentschrift:
28.03.90

(51) Int. Cl.⁴: **B65H 75/24, B23B 31/40**

(21) Anmeldenummer: **87100157.4**

(22) Anmeldetag: **08.01.87**

(54) Spannwelle.

(30) Priorität: **27.12.86  DE 8634752 U**

(43) Veröffentlichungstag der Anmeldung:
**27.07.88 Patentblatt 88/30**

(45) Bekanntmachung des Hinweises auf die Patenterteilung:
**28.03.90 Patentblatt 90/13**

(84) Benannte Vertragsstaaten:
**AT BE CH DE ES FR GB GR IT LI LU NL SE**

(56) Entgegenhaltungen:
**CH-A- 517 998
DE-C- 898 584
GB-A- 1 184 405
GB-A- 2 023 256
US-A- 4 061 289**

(73) Patentinhaber: **Tidland GmbH, Siemensstrasse 13-15,
D-4422 Ahaus(DE)**

(72) Erfinder: **Chlupsa, Otto, Goethestrasse 52,
D-6070 Langen(DE)**

(74) Vertreter: **Gudel, Diether, Dr. et al, Patentanwälte Dr. V.
Schmied-Kowarzik Dipl.-Ing. G. Dannenberg Dr. P.
Weinhold Dr. D. Gudel Dipl.-Ing. S. Schubert Dr. P. Barz
Grosse Eschenheimer Strasse 39, D-6000 Frankfurt am
Main 1(DE)**

ACTORUM AG

## Beschreibung

Die Erfindung betrifft eine Spannwelle mit einem rohrförmigen Wellenkörper mit Lagerzapfen an seinen beiden Enden und mit im Wellenkörper gelagerten Expansionskeilen, die bei einer axialen Verschiebung einer Schubstange durch entsprechende schlitzförmige Öffnungen im Wellenkörper hindurchtreten und dadurch eine über die Spannwelle geschobene Hülse spannen, wobei die Expansionskeile Schrägen haben, an denen Schrägen der Schubstange anliegen und Federelemente vorgesehen sind, die bei einer Verschiebung der Schubstange in entgegengesetzter Richtung die Expansionskeile in ihre eingezogene Ausgangslage bewegen, und ferner ein pneumatischer Antrieb für die Verschiebung der Schubstange vorgesehen ist.

Derartige Spannwellen dienen zum Spannen einer Hülse oder eines ähnlichen, hülsenartigen Bauteils, wobei die Spannwelle einen bestimmten Durchmesserbereich überspannen soll.

Grundsätzlich unterscheidet man mechanische Spannwellen, wie vorstehend beschrieben, bei denen die Expansion über die Expansionskeile bewirkt wird. Ein anderer bekannter Typ der Spannwellen beruht auf dehnbaren Schläuchen, die aufgeblasen werden, wodurch sich die Spannwelle ausdehnt. Hier können aber gelegentlich Probleme mit der Abdichtung der Schläuche auftreten.

Es sind mechanische Spannwellen, die also Gebrauch von den erwähnten Expansionskeilen machen, bekannt, bei denen die zum Expandieren notwendige Kraft über ein Schraubwerkzeug aufgebracht wird, das auf ein Mehrkant aufgesetzt wird, das wiederum über ein Gewinde die Schubstange in der einen oder anderen Richtung verschiebt. Diese Betätigung hat zwar den Vorteil, daß sie von äußeren Energiequellen, wie Strom oder Preßluft, unabhängig ist und daher überall eingesetzt werden kann, jedoch können sich in der Praxis Probleme ergeben, die darauf beruhen, daß die notwendige Spannkraft von Hand über das Schraubwerkzeug aufgebracht werden muß. Will man nicht ein sehr langes Schraubwerkzeug wegen des größeren Hebelarms verwenden, was unpraktisch ist, so kann eine Person häufig die notwendige Spannkraft nicht aufbringen, zumal Verluste in der Kraftübertragung zwischen dem Schraubwerkzeug und der Schubstange sowie den Expansionskeilen auftreten.

Es gibt daher auch derartige mechanische Spannwellen, bei denen der Antrieb über eine Kolben-Zylinder-Einheit aufgebracht wird, die mit Preßluft betrieben wird. Der Kolben dieser Einheit ist hierbei kraftschlüssig mit der Schubstange verbunden und verschiebt diese. Hier ist es aber ebenfalls problematisch, die notwendige Spannkraft aufzubringen, insbesondere bei Spannwellen mit kleineren Durchmessern, beispielsweise in der Größenordnung von 30 mm. Die hierbei für den Kolben zur Verfügung stehende Fläche ist häufig zu klein, um eine ausreichende Spannkraft aufzubringen, zumal der Druck der Preßluft ebenfalls begrenzt ist und man in den Werkshallen, in denen derartige Spannwellen zum Einsatz kommen, für diese Spannwellen nicht eine gesonderte Preßluftquelle zur Verfügung stellen will.

Die US-A 4 061 289 beschreibt eine fest mit dem Boden verbundene Winde, wobei an ein Ende der Welle der Winde ein die Welle betätigender Druckluftmotor angeflanscht ist. Würde man dieses Prinzip auf eine Spannwelle mit den Merkmalen des Oberbegriffs von Patentanspruch 1 übertragen, so würde dies zu keiner brauchbaren Lösung führen, weil der Druckluftmotor an dieser Stelle der Spannwelle deren Handhabung empfindlich stört.

Die Erfindung vermeidet diese Nachteile. Ihr liegt die Aufgabe zugrunde, eine mechanische Spannwelle mit den eingangs genannten Merkmalen vorzuschlagen, deren Spannkraft allen heutigen Anforderungen genügt.

Zur Lösung dieser Aufgabe ist die Erfindung dadurch gekennzeichnet, daß der Antrieb als ein von Druckluft betätigter Motor ausgebildet ist, dessen Drehbewegung über eine Untersetzung die Schubstange verschiebt und der an einem der Enden der Spannwelle vor dem betreffenden Lagerzapfen in diese eingebaut ist, wobei im Wellenkörper in der Ebene eines Turbinenrades des Luftmotors winkelig zueinander beabstandet zwei Drucklufteinlässe sowie ein Druckluftauslaß vorgesehen sind.

Der Druckluftmotor wird über die in der Welle ohnedies vorhandene Preßluft betätigt, wobei eine herkömmliche Preßluftpistole von Hand an einen der Drucklufteinlässe im Wellenkörper angelegt wird, so daß die Druckluft bei Betätigung der Druckluftpistole über den Einlaß zum Turbinenrad des Luftmotors kommt und das Turbinenrad mit sehr hoher Geschwindigkeit dreht. Diese hohe Drehgeschwindigkeit wird anschließend ausreichend untersetzt, wodurch die notwendige hohe Kraft aufgebracht wird, die dann über die Schubstange in herkömmlicher Art und Weise auf die Expansionskeile übertragen wird, die sich dann in radialer Richtung nach außen bzw. innen verschieben. Die Druckluft verläßt den Wellenkörper über den Druckluftauslaß. Bei Verwendung des einen der beiden Drucklufteinlässe dreht das Turbinenrad in der einen Drehrichtung und bei Verwendung des anderen der Drucklufteinlässe dreht es in der anderen Drehrichtung. Der einen Drehrichtung ist ein Expandieren der Spannwelle zugeordnet und der anderen Drehrichtung ein Zusammenziehen der Spannwelle bzw. der Expansionskeile. Durch einfache Wahl einer der beiden Drucklufteinlässe kann man somit die Betätigungsrichtung der Spannwelle bestimmen.

Falls die erfindungsgemäße Spannwelle auch an Orten eingesetzt werden soll, wo keine Druckluft zur Verfügung steht, wird es bevorzugt, wenn am anderen Ende der Spannwelle ein mit der Schubstange verbundener Mehrkant vorgesehen ist, der zur Verschiebung der Schubstange über ein Schraubwerkzeug betätigt werden kann, wie dies an sich bekannt ist.

Die Erfindung wird im folgenden anhand eines Ausführungsbeispieles näher erläutert, aus dem sich weitere wichtige Merkmale ergeben. Es zeigt:

Fig. 1 eine teilweise geschnittene Ansicht einer erfindungsgemäßen Spannwelle;
Fig. 2 einen Schnitt längs der Linie A-B von Fig. I;
Fig. 3 einen Schnitt längs der Linie C-D von Fig. I;
Fig. 4 einen Schnitt längs der Linie E-F von Fig. I.

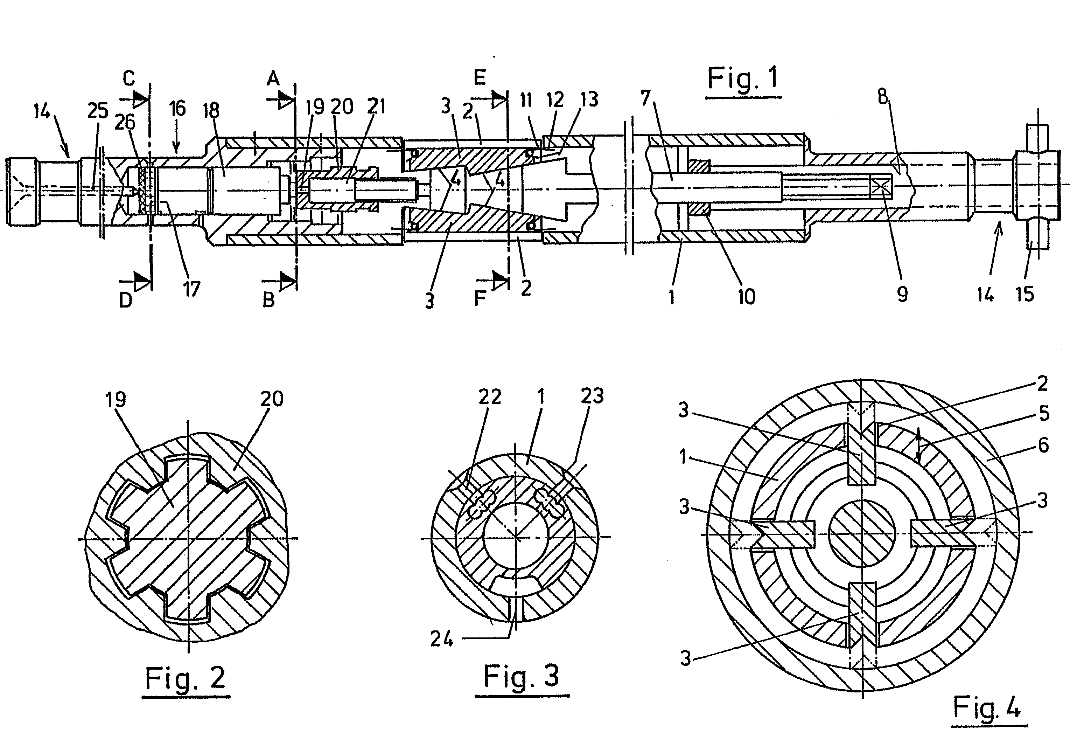

Die Spannwelle besteht aus einem rohrförmigen Wellenkörper I, in dem über seine Länge verteilt und winkelig gleichmäßig voneinander beabstandet mehrere schlitzförmige Öffnungen 2 angelegt sind (siehe auch Fig. 4). Im Bereich dieser Öffnungen sind Expansionskeile 3 angeordnet, die vorzugsweise mehrere Schrägen 4 hintereinander haben. Die Keile werden in radialer Richtung ausgefahren bzw. eingezogen (siehe Doppelpfeil 5). Die äußeren Kanten der Keile sind V-förmig profiliert, wie dies Fig. 4 zeigt, und zwar damit sich die Keile besser in einer Hülse 6 festlegen können, die mit der erfindungsgemäßen Spannwelle gespannt werden soll.

Hierzu ist eine Schubstange 7 vorgesehen, die in axialer Richtung verschiebbar ist. Die Schubstange hat ebenfalls Schrägen entsprechend den Schrägen 4 der Keile 3.

Am rechten Ende der Spannwelle ist zum Verschieben der Schubstange ein durch eine Bohrung 8 zugänglicher Mehrkant 9 vorgesehen, der über die Bohrung 8 von außen durch ein geeignetes Schraubwerkzeug betätigt werden kann. Bei Betätigung wird also die Schubstange verdreht, wobei sie mit einem Gewinde in einer Gewindebuchse I0 läuft und dadurch in axialer Richtung nach rechts oder links verschoben wird, wodurch, wie beschrieben, die Welle gespannt oder zusammengezogen wird.

Für die Rückführung der Expansionskeile sind Federn II vorgesehen, die sich mit einem Schenkel I2 an der Innenseite des Wellenkörpers I abstützen und mit dem anderen Schenkel I3 an entsprechenden Absätzen der Keile 3 anliegen.

Fig. I zeigt auch, daß die beiden Enden der Spannwelle als Lagerzapfen I4 mit einem verringerten Durchmesser ausgebildet sind. Ein Kupplungsstift I5 ist quer in einen der Lagerzapfen eingesteckt und dient zur Übertragung des Drehmoments im Betrieb der Spannwelle.

Erfindungsgemäß ist ein Druckluftmotor I6 in das eine Ende der Spannwelle eingesetzt. Dieser hat ein Turbinenrad I7, dessen Drehbewegung über ein bei Pos. I8 angedeutetes Untersetzungsgetriebe geeignet untersetzt wird. Die Abtriebswelle I9 des Motors ist mit einer Gewindebuchse 20 verzahnt (siehe auch Fig. 2), so daß bei einer Drehung der Welle I9 ein mit einem Außengewinde versehenes Ende 2I der Schubstange 7 in axialer Richtung verschoben wird, wodurch ebenfalls, wie vorstehend beschrieben, die Spannwelle expandiert wird, bzw. sich zusammenzieht.

Fig. 3 zeigt, daß zum Betätigen des Turbinenrades des Luftmotors eine erste Einlaßöffnung 22 und eine zweite Einlaßöffnung 23 vorgesehen sind sowie eine Auslaßöffnung 24. Die Einlaßöffnungen verbreitern sich nach außen zum luftdichten Ansetzen einer elastischen Mündung einer Druckluftpistole. Die Öffnung 22 dient für den Linkslauf des Motors und die Öffnung 23 für den Rechtslauf des Motors, so daß über die Öffnung 22 die Spannwelle gelöst wird und über die Öffnung 23 die Spannwelle gespannt wird.

In Fig. I ist links noch eine Montagebohrung 25 gezeigt sowie eine Gummischeibe 26 am linken Ende des Motors I6.

Der Motor mit seinem Untersetzungsgetriebe und den getrieblich nachgeschalteten Bauelementen hat eine selbstsperrende Wirkung derart, daß auch bei stillstehendem Motor die Keile 3 nicht unbeabsichtigt in das Innere der Spannwelle eingedrückt werden können.

Dadurch, daß die beiden Antriebe I6, 9 an den beiden Enden der Spannwelle vorgesehen sind, kann diese wahlweise mit Druckluft (Preßluft) oder auch von Hand betätigt werden, was für viele Einsatzfälle vorteilhaft ist.

Die Rückholfedern I2 dienen auch zur Sicherung der Keile 3.

Die Antriebswelle I9 kann auch als zylindrischer Zapfen (ohne Vielkeil) mit einer Paßnut und Paßfeder ausgeführt werden. Bei dieser Ausführungsform ergibt sich eine besonders große Kraftübertragung.

## Patentansprüche

1. Spannwelle mit einem rohrförmigen Wellenkörper (1) mit Lagerzapfen (14) an seinen beiden Enden und mit im Wellenkörper (1) gelagerten Expansionskeilen (3), die bei einer axialen Verschiebung einer Schubstange (7) durch entsprechende schlitzförmige Öffnungen (2) im Wellenkörper (1) hindurchtreten und dadurch eine über die Spannwelle geschobene Hülse (6) spannen, wobei die Expansionskeile (3) Schrägen (4) haben, an denen Schrägen der Schubstange (7) anliegen und Federelemente (11) vorgesehen sind, die bei einer Verschiebung der Schubstange (7) in entgegengesetzter Richtung die Expansionskeile (3) in ihre eingezogene Ausgangslage bewegen, und ferner ein pneumatischer Antrieb für die Verschiebung der Schubstange (7) vorgesehen ist, dadurch gekennzeichnet, daß der Antrieb als ein von Druckluft betätigter Motor (16) ausgebildet ist, dessen Drehbewegung über eine Untersetzung (18) die Schubstange (7) verschiebt und der an einem der Enden der Spannwelle vor dem betreffenden Lagerzapfen (14) in diese eingebaut ist, wobei im Wellenkörper (1) in der Ebene eines Turbinenrades (17) des Luftmotors (16) winkelig zueinander beabstandet zwei Drucklufteinlässe (22, 23) sowie ein Druckluftauslaß (24) vorgesehen sind.

2. Spannwelle nach Anspruch 1, dadurch gekennzeichnet, daß am anderen Ende der Spannwelle ein mit der Schubstange (7) verbundener Mehrkant (9) vorgesehen ist, der zur Verschiebung der Schubstange (7) über ein Schraubwerkzeug betätigt werden kann.

## Claims

1. A clamping shaft comprising a tubular shaft body (1) with trunnions (14) at both its ends and expansion wedges (3) mounted in the shaft body (1) which in an axial displacement of a connecting rod (7) passing through respective slotlike openings (2) in the shaft body (1) thereby clamping a socket (6) slipped over the clamping shaft, wherein the expansion wedges (3) are provided with slopes (4) engaging slopes of the connecting rod (7) and that spring elements (11) are provided which in a displacement of the connecting rod (7) in the opposite direction are moving the expansion wedges (3) into their withdrawn starting position and that furthermore a pneumatic drive for the displacement of the connecting rod (7) is provided, characterized in that the drive is provided as a by air pressure actuated motor (16) the rotation movement of which is displacing by a gear (18) the connecting rod (7) and the motor is mounted onto one end of the clamping shaft in front of the respective trunnion (14), wherein in the shaft body in the plane of a turbine wheel (17) of the air motor (16) spaced angularly to each other two air pressure inlets (22, 23) as well as an air pressure outlet (24) are provided.

2. A clamping shaft according to claim 1, characterized in that at the other end of the clamping shaft (7) a polyhedral (9) is provided being connected with the connecting rod (7) which can be actuated for the displacement of the connecting rod (7) by a screwing tool.

**Revendications**

1. Mandrin expansible comportant un corps tubulaire d'arbre (1) comprenant un tourillon (14), à chacune de ses extrémités, et des coins d'expansion (3) logées dans le corps d'arbre (1), qui pénètrent dans le corps d'arbre (1) à travers des ouvertures correspondantes (2) en forme de fentes lors du coulissement axial d'une tige de poussée (7) et mettent ainsi sous tension une douille (6) coulissant sous l'effet du mandrin expansible, les coins d'expansion (3) présentant des pentes (4) sur lesquelles reposent des pentes de la tige de poussée (7) et sont prévus des éléments élastiques (11) qui, en cas de coulissement de la tige de poussée (7) en un sens opposé, déplacent les coins d'expansion (3) dans une position rétractée de sortie, et en outre un dispositif d'entraînement pneumatique pour le coulissement de la tige de poussée (7), caractérisé en ce que le dispositif d'entraînement est constitué par un moteur (16) actionné à l'air comprimé, dont le mouvement de rotation déplace par l'intermédiaire d'un réducteur (18) la tige de poussée (7) et qui est monté à l'une des extrémités du mandrin expansible avant le tourillon correspondant (14), le corps d'arbre (1) comportant deux amenées d'air comprimé (22, 23), disposées angulairement espacées l'une de l'autre dans le plan d'une roue de turbine (17) du moteur à air, ainsi qu'une sortie (2A) d'air comprimé.

2. Mandrin expansible selon la revendication 1, caractérisé en ce qu'il est prévu une tête polygonale (9), qui est reliée à la tige de poussée (7) à l'autre extrémité du mandrin expansible et qui peut être actionnée par un outil de vissage pour le coulissement de la tige de poussée (7).

Fig. 2

Fig. 3

Fig. 4

Fig. 1